# EUROPEAN PATENT SPECIFICATION

(11) **EP 2 649 348 B1**
(45) Date of publication and mention of the grant of the patent: **15.03.2017**
(21) Application number: 12705172.0
(22) Date of filing: 31.01.2012
(51) Int. Cl.: F16H 61/421, F16H 61/431, F03D 9/00, F03D 15/20

(54) **HYDRAULIC TRANSMISSION COMPRISING VARIABLE DISPLACEMENT PUMP OR MOTOR OPERABLE WITH DISCONTINUOUS RANGE OF DISPLACEMENTS**
HYDRAULIKGETRIEBE MIT EINER VERDRÄNGERPUMPE ODER EINEM MOTOR MIT DISKONTINUIERLICHEN VERDRÄNGUNGSBEREICHEN
TRANSMISSION HYDRAULIQUE COMPRENANT UNE POMPE OU UN MOTEUR À CYLINDRÉE VARIABLE POUVANT FONCTIONNER DANS UNE PLAGE DE DÉPLACEMENTS DISCONTINUE

(43) Date of publication of application: 16.10.2013
(73) Proprietor: Mitsubishi Heavy Industries, Ltd., Tokyo 108-8215 (JP)
(72) Inventor: CALDWELL, Niall, Loanhead Midlothian Lothian EH20 9TB (GB); DUMNOV, Daniil, Loanhead Midlothian Lothian EH20 9TB (GB); LAIRD, Stephen, Loanhead Midlothian Lothian EH20 9TB (GB)
(74) Representative: Alistair Hindle Associates Limited
(86) International application number: PCT/JP2012/000629
(87) International publication number: WO 2013/114437

(56) References cited:
- WO-A2-2011/147997
- US-A1- 2008 251 302
- US-A1- 2009 140 522
- US-A1- 2009 241 530
- US-A1- 2012 018 010

## Description

### Technical Field

The present invention relates to the field of hydraulic transmissions comprising a variable displacement hydraulic pump and a variable displacement hydraulic motor.

### Background Art

Hydraulic transmissions are useful for applications such as power conversion in renewable energy extraction devices and it is known to provide a wind turbine generator with a hydraulic transmission comprising a variable displacement hydraulic pump which is coupled to the turbine blades through a rotating shaft and one or more variable displacement hydraulic motors which are coupled to electrical generators.

Known hydraulic transmissions employing variable displacement hydraulic pumps and motors typically employ pumps and motors both of which are capable of operating with a continuous range of displacements. This enables both input and output torque to be controlled across continuous ranges. By input torque we refer to the torque applied to the pump, and by output torque we refer to the torque generated by the motor. US 7,793,496 (Rampen) provides a hydraulic transmission for a vehicle application which comprises both a variable displacement hydraulic pump and a variable displacement hydraulic motor, each of which has a continuously variable output displacement. As the displacement of both the hydraulic pump and the hydraulic motor can be rapidly and infinitely varied, torque transmission is highly controllable.

Control of output torque is important in renewable energy extraction devices as it is desirable to regulate the torque applied by a hydraulic motor to an electrical generator to optimise power output and in some embodiments to ensure the electrical generator remains in phase with an electricity sink (e.g. an electricity grid). Control of input torque is especially important in applications where a turbine is coupled to the hydraulic pump. In that case, the input torque to the hydraulic pump through the rotatable shaft is coupled to the torque applied in the opposite sense to the turbine. It can be particularly important to control the torque applied to the turbine (and therefore the blades of the turbine) in renewable energy turbines as there will be an optimum torque for efficient power generation which will vary with factors such as the speed of rotation of the turbine. This is especially relevant where a turbine is coupled directly to the hydraulic pump through a rotatable shaft, that is to say, without an intervening gear box.

However, there can be circumstances in which it would be desirable to use a variable displacement hydraulic pump or hydraulic motor which has a range of displacements of oil which is discontinuous. For example, it may be desirable to avoid operating the hydraulic pump or motor at one or more displacements at which it generates forces having an undesirable frequency (e.g. a frequency corresponding to a resonant frequency of a component of a machine in which the transmission is mounted, e.g. a resonant frequency of the blades or tower of a wind turbine generator). It may be desirable to employ a hydraulic pump or hydraulic motor which has a discontinuous range of displacements because it has other operating advances.

Accordingly, the invention addresses the technical problem of providing a hydraulic transmission comprising a variable displacement hydraulic pump and a variable displacement hydraulic motor, in which the hydraulic pump or the hydraulic motor has a discontinuous range of displacements but where it is desirable to have a continuous range of input and output torques.

By displacement we refer to the net amount of oil displaced for a given angular rotation of a shaft which is coupled to the cycles of cylinder volume.

### Summary of Invention

According to a first aspect of the invention there is provided a hydraulic transmission comprising a hydraulic pump, a hydraulic motor, a high pressure line connecting an output of the hydraulic pump to an input of the hydraulic motor and a low pressure line connecting an output of the hydraulic pump to an input of the hydraulic motor, and a transmission controller, wherein the hydraulic pump and the hydraulic motor each comprise a low pressure manifold in communication with the low pressure line, a high pressure manifold in communication with the high pressure line, a plurality of cylinders and a plurality of valves for regulating the flow of oil between each cylinder and the low and high pressure manifolds, at least one valve associated with each cylinder being an electronically controlled valve which is actively controllable on each cycle of cylinder volume to select whether each cylinder undergoes an active cycle in which there is a net displacement of oil or an inactive cycle in which there is no net displacement of oil,
wherein, in at least one operating mode, one of the hydraulic pump or the hydraulic motor is operated with a discontinuous range of displacements of oil and the other of the hydraulic pump or the hydraulic motor is operated with a continuous range of displacements of oil, and the transmission controller is configured (e.g. programmed) to control the displacement of said other of the hydraulic pump and the hydraulic motor being operated with the continuous range of displacements so as to vary the pressure in the high pressure manifold to allow the input and output torque of the transmission to be varied across continuous ranges and to obtain desired values of the input and output torque while said one of the hydraulic pump or the hydraulic motor is operated in the discontinuous range of displacements.

The input torque of the transmission is a function of the instantaneous displacement of the hydraulic pump and the pressure difference between the high pressure manifold and the low pressure manifold of the hydraulic pump (which pressure is typically very similar to the pressure difference between the high pressure line and the low pressure line). The output torque of the transmission is a function of the instantaneous displacement of the hydraulic motor and the pressure difference between the high pressure manifold and the low pressure manifold of the hydraulic motor (which pressure is typically very similar to the pressure difference between the high pressure line and the low pressure line).

Accordingly, even when one of the hydraulic pump and the hydraulic motor is operated with a discontinuous range of displacements, by ensuring that the other of the hydraulic pump and the hydraulic motor is operable with a continuous range of displacements of oil and the pressure in the high pressure line is variable, a continuously variable range of input and output torques can nevertheless be obtained. Although the pressure in the low pressure line may be measured and taken into account to obtain a desired input and output torque, it is typically not actively regulated for the purposes of the present invention. Nevertheless, some regulation of the low pressure line pressure may take place for other purposes.

This is advantageous as it allows a hydraulic pump or motor which is unable to provide a continuous range of displacements to be used, or allows certain displacements to be deliberately omitted thereby providing a discontinuous range of displacements. For example, certain displacements may be deliberately omitted because the hydraulic pump or motor may give out forces with undesirable frequencies when operated at a certain displacement, or to enable one of the hydraulic pump and the hydraulic motor to be operated in such a way as to minimise torque ripple or bearing side load. Thus, it may be that although said one of the hydraulic pump or the hydraulic motor is capable of a continuous range of displacements, it is operated with a discontinuous range of displacements, for example, to avoid generating forces with undesirable frequencies. In that case, the one or more discontinuities in the discontinuous range of displacements may change with the speed of rotation of a shaft coupled to cycles of cylinder volume of said one of the hydraulic pump or the hydraulic motor as the displacement required to generated forces with the relevant frequency may depend on both displacement and the speed of shaft rotation.

The electronically controlled valves may be controlled by the transmission controller or a separate controller. The hydraulic pump and the hydraulic motor may each comprise a controller which actively controls the electronically controlled valve on each cycle of cylinder volume to select whether each cylinder undergoes an active cycle or an inactive cycle.

The displacement of said other of the hydraulic pump and the hydraulic motor is controlled to vary the pressure in the high pressure manifold.

Said other of the hydraulic pump and the hydraulic motor can change the pressure in the high pressure line quickly simply by selecting whether cylinders execute active or inactive cycles as required to increase or decrease the pressure in the high pressure line. As the cylinders are typically disposed around a cam and phased apart typically only a small period of time elapses from a change in demand before there is an opportunity to select the net displacement of a cylinder. The net displacement of one or more cylinders could also be changed part way through a cycle, after a decision was initially made as to whether the cylinder would execute an active or inactive cycle, by actively controlling valve opening or closing.

It may be that the hydraulic pump or the hydraulic motor respectively is capable of producing a continuous range of displacements but is programmed to exclude one or more displacements.

It may be that said discontinuous range of displacements excludes displacements selected to avoid generating forces with one or more undesirable frequencies. The undesirable frequencies may, for example, be frequencies of oscillation of structural components of a device including the hydraulic transmission. For example, where the hydraulic transmission is part of the nacelle of a wind turbine generator, the undesirable frequencies may be frequencies of oscillation of the wind turbine blades or the wind turbine tower. It may be that said discontinuous range of displacements includes displacements selected to minimise generated noise.

It may be that the high pressure line is defined entirely by rigid walls. In this case, the pressure in the high pressure line will change rapidly in response to changes in the displacement of the hydraulic pump or motor. However, it may be that the high pressure line is in continuous or selective communication with a variable volume oil retaining container (typically an accumulator, or a length of flexible hose). The high pressure line may comprise a variable volume portion such as a length of flexible hose.

Where an accumulator or other variable volume oil retaining container is in communication with the high pressure line, this reduces the rate of change of pressure in the high pressure line responsive to changes in the displacement of the hydraulic pump or hydraulic motor, which can in some applications have the advantage of smoothing changes in input and/or output torque.

It may be that the hydraulic pump or the hydraulic motor respectively is configured
to cause selected cylinders to undergo active cycles and the remainder of said plurality of cylinders to undergo inactive cycles, wherein the selected cylinders form one or more groups of cylinders, so that there is a correlation between cylinders in each group undergoing active cycles.

Accordingly, the selected cylinders will undergo active cycles during each volume cycle and the remaining cylinders will undergo inactive cycles during each volume cycle until the selection is changed. As the selected cylinders form one or more groups, the selection of cylinders will be correlated so that if a first cylinder typically undergoes an active cycle, a second cylinder in the same group will typically undergo an active cycle. Thus, in contrast to known arrangements in which there is no correlation between the selection of cylinders to undergo active cycles, the groups can be defined so as to improve the lifetime of the machine, for example, to reduce torque ripple or bearing side load. As a result, the controller operates the cylinders so that one of a plurality of discrete fractions of the available cylinders undergo active cycles, which plurality of discrete fractions of the available cylinders are fewer in number that than the number of possible discrete fractions of the available cylinders if a decision was made independently for each cylinder as to whether the respective cylinder should undergo an active cycle or an inactive cycle. The number of discrete fractions of the available cylinders is preferably less than the number of cylinders in the plurality of cylinders.

Said plurality of cylinders may be all of the cylinders of the hydraulic pump or motor, or all of the cylinders around an eccentric, however, it is possible for the hydraulic pump or motor to comprise one or more further cylinders which are selected in a different way.

Preferably, the hydraulic pump or motor comprises a rotating shaft and a shaft position sensor to determine the position of the rotating shaft and the controller is configured to operate the electronically controlled valves in phased relationship to cycles of cylinder volume, taking into account the shaft position measured by the shaft position sensor.

By a correlation we refer to a correlation which is substantially independent of displacement and is therefore not the apparent correlation which might arise temporarily in prior art machines if displacement demand was held at a fraction of maximum output which caused certain cylinders to be selected on each cycle of working chamber volume until the displacement demand signal changed (for example, in a machine with 12 cylinders which are equally spaced in phase, at a demand of precisely 25% of maximum demand the same 3 cylinders would be selected on each cycle until there was a small change in the demand signal). Thus, the selected cylinders will typically undergo active cycles repetitively while the remainder of said plurality of cylinders undergo inactive cycles repetitively until the selection of cylinders is changed.

By a group of cylinders we refer to a minimum of two cylinders. Typically the groups of cylinders are group of at least three cylinders. Typically the cylinders have the same volume. Typically, apart from phase offsets, the profile of cylinder volume with shaft phase is the same for each cylinder.

Preferably, the cylinders in each group are selected to limit (preferably minimise) either one or both of torque ripple and bearing side load.

Torque ripple is strongly affected by variations in the rate of displacement of working fluid by the cylinders to the high pressure working fluid line (in the case of a pump or a pump-motor operating as a pump) or from the high pressure working fluid line (in the case of a motor or a pump-motor operating as a motor). By causing only one or more groups of cylinders to undergo active cycles, each group having been selected to limit torque ripple, overall torque ripple is limited. The torque ripple generated by groups of cylinders depends on the phase difference between the cylinders in the group and their variation in displaced fluid with phase during each cycle of cylinder volume. The selected cylinders undergo active cycles and the remaining cylinders undergo idle cycles until the selection of groups of cylinders is changed. Typically, changes in the selection of groups of cylinders are minimised, thereby minimising the torque ripple which may occur temporarily due to changes in the selection of groups.

Bearing side load arises from unequal forces acting on the cam, leading to net radial forces. Bearing side load can be limited by, for example, including cylinders which are both in phase and on opposite sides of a cam from each other in the same group, so that the forces which they exert on the cam and thereby on the bearings are cancelled out. This reduces undesirable forces acting on the crankshaft and bearings.

Typically, the cylinders in the group are selected to reduce the variation between maximum and minimum torque during repeating cycles of cylinder volume to within 10%, or preferably, within 5% of the maximum torque.

The hydraulic pump or motor may be configured so that the cylinders in each group are operated with phase differences spaced apart by 360°/n where n is an integer greater than 2 to thereby limit torque ripple.

This phase difference minimises torque ripple for most cam working surface profiles. The phase difference between any two cylinder is determined by the angular displacement of the two cylinders around the cam and by the profile of the working surface of the cam. The cam may be a ring cam. The cylinders may be located around the outside of the ring cam. The cylinder may be located around the inside of the ring cam. The cam may be a multi-lobe cam.

It may be that in at least some circumstances, one or more groups of cylinders are selected such that for each cylinder in the selected one or more groups, there is another cylinder which is operated in phase with said cylinder located on the opposite side of the cam, or an integer number, m, of other cylinders operated in phase with said cylinder mutually spaced around the cam by an angle of 360° / m, to limit bearing side load. Preferably, although bearing side load is limited, it is not reduced to zero but instead maintained below a threshold as it can be advantageous to have some small bearing side load to avoid the bearing slipping.

Therefore, the forces exerted on the cam by working fluid within the cylinders (typically through pistons and piston shoes or rollers) are balanced, with substantially the same radially inwards force being exerted in opposite senses by cylinders on opposite sides of the cam (or m cylinders mutually spaced by 360° / m having a net resultant force of substantially zero). This minimises bearing side load. It may be that the one or more groups of cylinders are selected in this way when the hydraulic machine is operating at specific fractions of maximum displacement. By a fraction of maximum displacement we refer to a proportion of the displacement which would occur if each cylinder displaced the maximum amount of working fluid which it can displace on each cycle of cylinder volume at a given shaft rotation speed.

It may be that, during normal operation, the selection of cylinders is changed less frequently than would be required to best match actual displacement to a displacement demand signal by selecting one or more groups of cylinders, from amongst a plurality of groups of cylinders, with a frequency equal to the frequency of cycles of cylinder volume.

It may be that, during normal operation, the selection of cylinders is usually (e.g. at least 90% of the time, or at least 95% or 98% of the time) changed less frequently than the frequency of cycles of cylinder volume.

These approaches contrast with the normal operating mode of hydraulic machines in which the displacement of working fluid by each cylinder is selectable on each cycle of cylinder volume by controlling electronically controlled valves, meaning that if there are cylinders which are phased n degrees apart, a decision as to whether to select an individual cylinder is made with a frequency = 360 / n * the frequency of cycles of cylinder volume. In combination with the operation of selected cylinders to undergo active cycles during each cycle of cylinder volume while the remaining cylinders in said plurality of cylinders undergo inactive cycles during each cycle of cylinder volume, this reduced cylinder selection frequency reduces torque ripple and/or bearing side load. This is because changing the selection of cylinders, from one or more groups which are selected to reduce torque ripple and/or bearing side load to a different one or more groups which are selected to reduce torque ripple and/or bearing side load typically introduces transients of torque ripple and/or bearing side load.

It may be that, during normal operation, the controller is configured to select one or more groups of cylinders from the plurality of cylinders so that one of a set of discrete possible fractions of the available cylinders are used and to change the selection of cylinders less frequently than would be required to best match a displacement demand signal by selecting a different one of the set of discrete possible displacements for a cycle of cylinder volume with a frequency equal to the frequency of cycles of working chamber volume, or less frequently that half of said frequency, or less frequently than one quarter of said frequency.

These approaches are especially useful in the case of hydraulic pump coupled to a renewable energy turbine, for example, a wind turbine, particularly a turbine having a mass in excess of 1 ton, as the inertia of the turbine is relatively high, and delays in changing the displacement of the pump (for example, due to a change in the speed of rotation of the turbine caused by fluctuating wind speeds) are not of especial concern.

The hydraulic machine may change the selection of cylinders more frequently in one or more alternative operating modes, for example, on shut down or start up, or in response to a transient event or a fault.

Typically, said plurality of cylinders share a common working fluid output (in the case of a pump or a pump-motor in pumping mode) or a common working fluid input (in the case of a motor or a pump-motor in motoring mode) and are individually connectable to the common working fluid output or common working fluid input on each cycle of cylinder volume by virtue of control of the electronically controlled valves by the controller.

There may be additional cylinders which have alternative working fluid outputs or inputs respectively. Preferably, the cylinders which have correlated active cycles are selected by the controller by executing a computer program (rather than being defined in hardware).

It may be that the controller selects whether individual cylinders undergo active cycles or inactive cycles taking into account cylinder grouping data which defines the plurality of groups of cylinders.

Cylinder group data is stored in a computer readable medium, such as RAM. Cylinder group data may be determined before operation of the hydraulic machine begins. Cylinder group data may be generated during operation of the hydraulic machine.

The controller may be programmed to change the cylinder grouping data to change the cylinders which make up at least one of the groups during operation, or to change the circumstances (e.g. displacement) under which at least one of the groups is selected, under some circumstances.

A cylinder may at one time belong to a first group and then later belong to a second group. It may be that the controller is programmed to change the cylinders which make up at least one of the groups during operation, or to change the circumstances under which at least one of the groups is selected, in response to determining that there is a fault in one or the cylinders, or to even out usage of the cylinders to reduce wear.

An active cycle may be a full stroke cycle in which a cylinder displaces a maximum stroke volume of working fluid. An active cycle may be a partial stroke cycle in which a cylinder displaces only a proportion of a maximum stroke volume of working fluid. An inactive cycle may be a cycle in which working fluid flows both into and out of the cylinder but with no net displacement of working fluid, or a cycle in which a cylinder remains sealed from the low and high pressure manifolds and therefore makes no net displacement of working fluid.

The controller may be programmed to regulate the opening and/or closing time of at least one valve associated with each cylinder to vary the net displacement of working fluid by each cylinder during active cycles.

Accordingly, some variation in the net displacement of working fluid by the hydraulic machine, per cycle of the cam, is possible without changing the selection of one or more groups of cylinders. This enables the hydraulic machine to adapt to small changes in demand without having to change the pattern of cylinders which execute active cycles. This reduces the frequency of changes in the pattern of cylinders which execute active cycles and thereby reduces transient torque ripple which could occur when changes are made.

It may be that the displacement of said one of the hydraulic pump and the hydraulic motor is variable by controlling the timing of opening or closing of said electronically controlled valves to select the net displacement of cylinders per cycle during active cycles.

It may be that the pressure in the high pressure line is changed in advance of a scheduled step change in the displacement of said one of the hydraulic pump and the hydraulic motor.

Preferably, the pressure in the high pressure line is controlled using a negative feedback loop, for example using a proportional integrator controller.

Typically, the timing of changes in the displacement of the hydraulic pump and the hydraulic motor is selected to smooth output torque.

It may be that the displacement of said one of the hydraulic pump and the hydraulic motor is variable across an operating range from zero to an operating maximum by the selection of one or more groups of cylinders which are to execute active cycles on each successive cycle, and by controlling the timing of opening or closing of said electronically controlled valves, wherein the range over which the displacement of cylinders during active cycles by controlling the timing of opening or closing of said electronically controlled valves is such that the net displacement of the hydraulic pump or hydraulic motor respectively is continuous in an upper region of said operating range but is discontinuous in a lower region of said operating range.

By selecting groups of one or more cylinders which are to execute active cycles on each successive cycle, the output of the hydraulic pump or motor is quantised if the net displacement of working fluid during each active cycle is the same. By varying the timing of the opening or closing of said electronically controlled valves it is possible to change the net displacement of working fluid during each active cycle, but the extent to which this is possible is limited. For example, it is impractical to actively open or close valves in the middle part of strokes when piston velocity is high and thus the rate of change of cylinder volume is high). Changing valve state during mid-stroke causes undesirable high impact stresses. The result is that at an upper end of the operating range of displacements it may be possible for said one of the hydraulic pump and the hydraulic motor to output any of a continuous range of displacements but the range may be discontinuous at a lower end of the operating range of displacements.

The invention extends in a second aspect to a renewable energy turbine generator comprising a hydraulic transmission according to the first aspect of the invention, a turbine driving the hydraulic pump and an electrical generator driven by the hydraulic motor.

The turbine may be connected directly to the hydraulic pump by way of a rotating shaft, without an intervening gear box.

The invention also extends to a vehicle in which an engine drives the hydraulic pump and the hydraulic motor drives wheels or other actuators.

According to a third aspect of the invention there is provided a method of operating a hydraulic transmission comprising a hydraulic pump, a hydraulic motor, a high pressure line connecting an output of the hydraulic pump to an input of the hydraulic motor and a low pressure line connecting an output of the hydraulic pump to an input of the hydraulic motor, wherein the hydraulic pump and the hydraulic motor each comprise a low pressure manifold, a high pressure manifold, a plurality of cylinders and a plurality of valves for regulating the flow of working fluid between each cylinder and the low and high pressure manifolds, at least one valve associated with each cylinder being an electronically controlled valve which is actively controlled on each cycle of cylinder volume to select whether each cylinder undergoes an active cycle in which there is a net displacement of working fluid or an inactive cycle in which there is no net displacement of working fluid,
the method comprising coordinating a discontinuous change in the displacement of working fluid by one of the hydraulic pump or the hydraulic motor with a change in the pressure in the high pressure manifold to thereby regulate the input and output torque of the hydraulic transmission.

It may be that said one of the hydraulic pump or the hydraulic motor is operated in a discontinuous range of displacements of working fluid and the other of the hydraulic pump or the hydraulic motor is operated in a continuous range of displacements of working fluid, and the input and output torque of the hydraulic transmission are variable across continuous ranges while said hydraulic pump or the hydraulic motor respectively is operated in the discontinuous range of displacements by virtue of said change in pressure in the high pressure manifold.

The invention also extends in a third aspect a computer readable medium (such as a RAM, ROM, EPROM, EEPROM, PROM or magnetic or optical disc) storing a computer program which, when executed on a hydraulic transmission controller, causes the hydraulic transmission to function as a hydraulic transmission according to the first aspect of the invention or according to the method of the second aspect of the invention.

Optional features described in relation to any one of the three aspects of the invention are optional features of each aspect of the invention.

### Brief Description of Drawings

An example embodiment of the invention will now be described with reference to the following Figures in which:
[fig.1]Figure 1 is a schematic diagram of a wind turbine generator having a hydraulic transmission according to the invention;
[fig.2]Figure 2 is a schematic diagram of a hydraulic pump;
[fig.3]Figure 3 is a graph showing the possible displacements of the hydraulic motor;
[fig.4]Figure 4 is a graph showing the possible displacement of an example embodiment of hydraulic pump operated with a discontinuous range of displacements;
[fig.5]Figure 5 is a graph showing the possible displacement of an alternative embodiment of hydraulic pump operated with a discontinuous range of displacements;
[fig.6]Figure 6 is a graph showing the possible displacement of a further embodiment of hydraulic pump operated with a discontinuous range of displacements; and
[fig.7]Figure 7 is a graph of the variation in hydraulic pump displacement, hydraulic motor displacement, pressure in the high pressure line and input torque for a period of time including a discontinuous change in the displacement of the hydraulic pump.
[fig.8]Figure 8 is a graph of the variation in hydraulic motor displacement for smoothing the variation in input torque prior to the intended change in hydraulic pump displacement.

### Description of Embodiments

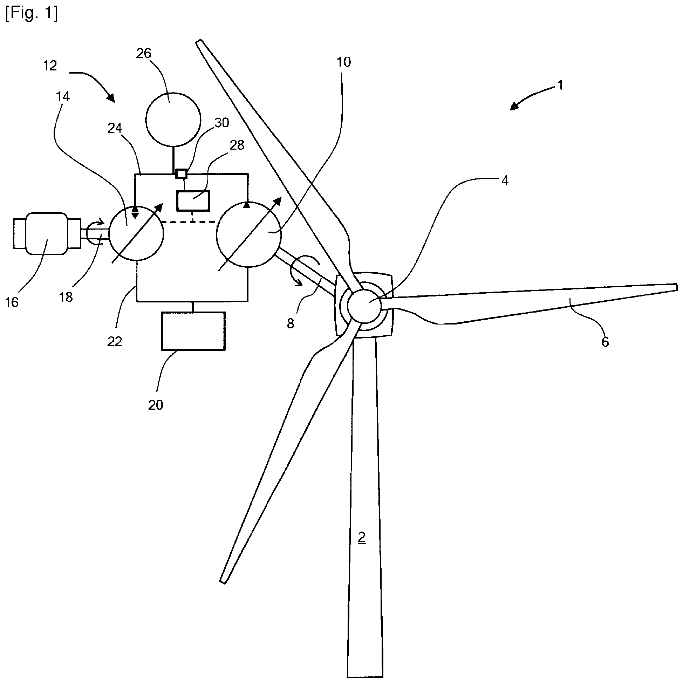

Figure 1 is a schematic diagram of a wind turbine generator 1 comprising a tower 2 upon which is mounted a turbine 4 having blades 6. Within the nacelle of the wind turbine generator (not shown), an input driveshaft 8 connects the turbine directly to a variable displacement hydraulic pump 10, without an intervening gear box. The variable displacement hydraulic pump is part of a hydraulic transmission shown generally as 12, which includes at least one variable displacement hydraulic motor 14, coupled to an electricity generator 16 through an output driveshaft 18. An oil tank 20 retains a stock of oil (as working fluid) and is in communication with a low pressure line 22 which extends from the output of the hydraulic motor to the input of the hydraulic pump. A high pressure line 24 extends from the output of the hydraulic pump to the hydraulic motor. An oleopneumatic accumulator 26 is connected to the high pressure line. In a typical embodiment, a plurality of hydraulic motors are provided, connected in parallel between the high pressure and low pressure lines, each of which drives a separate generator.

As the displacement of both the hydraulic pump and the hydraulic motor is variable, the transmission transmits power from the motor to the electricity generator, while allowing independent control of both the torque in the input driveshaft 8 (the input torque) and the generator drive shaft 18 (the output torque). The torque in the input driveshaft is regulated by a turbine controller 28 (functioning as the transmission controller) which receives, amongst other inputs, measurements of the pressure in the high pressure line from a pressure sensor 30 and which controls the displacement of the hydraulic pump and the hydraulic motor, and possible other actuators, such as blade pitch controls etc.

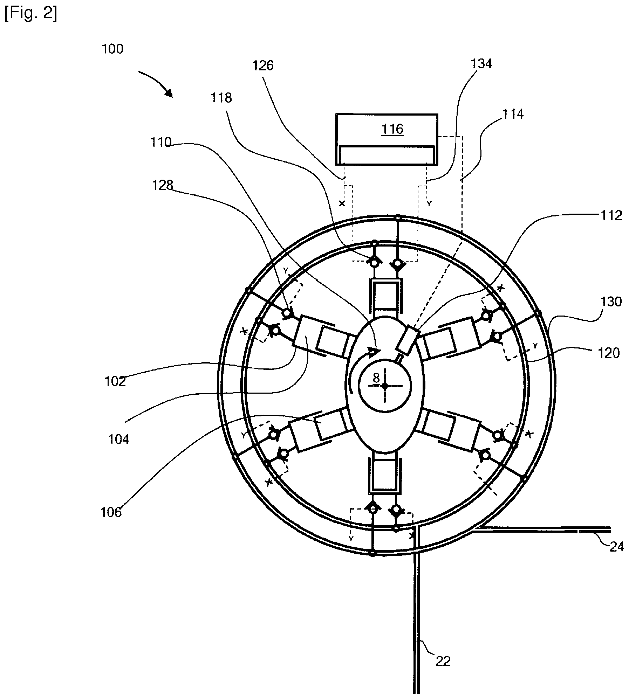

The hydraulic pump and the hydraulic motor are each variable displacement radial piston hydraulic machines in which the volume of working fluid which is displaced by each cylinder on each cycle of cylinder volume is selectable by the control of electronic valves. Figure 2 illustrates a hydraulic machine of this type 100, in the form of an electronically commutated hydraulic pump/motor comprising a plurality of cylinders 102 having cyclically varying cylinder volumes 104 defined between the interior surface of the cylinders and respective pistons 106 which are driven from a rotatable crankshaft 108 by a multi-lobe eccentric cam 110 thereby reciprocating within the cylinders to cyclically vary the cylinder volumes. In the case of the hydraulic pump, the rotatable crankshaft is coupled to the turbine driveshaft and in the case of the hydraulic motor, the rotatable crankshaft is coupled to the output driveshaft. A shaft position and speed sensor 112 determines the instantaneous angular position and speed of rotation of the shaft, and through signal line 114 informs a machine controller 116, which enables the controller to determine the instantaneous phase of the cycles of each working chamber. The machine controller is typically a microprocessor or microcontroller which executes a stored program in use. In some embodiments, the turbine controller may also function as the machine controller of the hydraulic pump and/or the hydraulic motor.

The working chambers are each associated with Low Pressure Valves (LPV) in the form of electronically actuated face-sealing poppet valves 118, which face inwards toward their associated cylinder and are operable to selectively seal off a channel extending from the cylinder to a low pressure manifold 120, which functions generally as a net source or sink of fluid in use and may connect one or several cylinders, or indeed all as is shown here, to the low pressure line 22. The LPVs are normally open solenoid closed valves which open passively when the pressure within the working chamber is less than the pressure within the low pressure manifold, i.e. during an intake stroke, to bring the cylinder into fluid communication with the low pressure manifold, but are selectively closable under the active control of the controller via LPV control lines 126 (connections are implied by X's in most cases to simplify the diagram) to bring the cylinder out of fluid communication with the low pressure manifold. Alternative electronically controllable valves may be employed, such as normally closed solenoid opened valves.

The working chambers are each further associated with High Pressure Valves (HPV) 128 which face outwards from the cylinders and are operable to seal off a channel extending from the cylinder to a high pressure manifold 30, which functions as a net source or sink of fluid in use and which may connect one or several working chambers, or indeed all as is shown here, to the high pressure line 24.

In the case of the hydraulic pump, the HPVs may be normally-closed pressure-opening check valves which open passively when the pressure within the cylinder exceeds the pressure within the high pressure manifold. In the case of the motor, or also the pump if it is desirable for it to be able to carry out motoring cycles, the HPVs are normally-closed solenoid opened check valves which the controller may selectively hold open once HPV is opened by pressure within the associated working chamber, using HPV control lines 134 (connections are implied by Y's in most cases to simplify the diagram).

In normal operation, as described in EP 0 361927, EP 0 494 236, EP 1 537 333 and EP 2 055 943, for example, the volume of working fluid displaced by each cylinder is controlled for each cycle of working chamber volume by active control of the HPV and LPV associated with the respective cylinder. (In the case of a hydraulic pump, active control of the HPV is optional and a pressure operated check valve may be employed). Active control can involve using energy to open, close, hold open or hold closed a valve. In the case of an active pumping cycle, the controller closes the LPV associated with a cylinder near the point of maximum volume in the associated cylinder volume cycle, closing the path to the low pressure manifold and thereby directing fluid out through the associated HPV on the subsequent contraction stroke. In the case of an active motoring cycle, the controller closes the HPV associated with a cylinder during the intake stroke (shortly before the point of maximum volume in the associated cylinder volume cycle in the case of a maximum volume active cycle) and then opens the LPV associated with the cylinder once pressure in the cylinder has dropped sufficiently so that working fluid is displaced to the low pressure manifold during the exhaust stroke. In order to achieve an inactive cycle, the LPV may be maintained in the open position so that working fluid is received from the low pressure manifold during the intake stroke and returned to the low pressure manifold during the exhaust stroke, or maintained in the closed position so that the cylinder remains sealed through a cycle of cylinder volume. Thus, it is possible for such a machine to provide any average displacement over a sufficiently long period of time, referred to as infinitely variable displacement, and being one example of a continuous range of displacements.

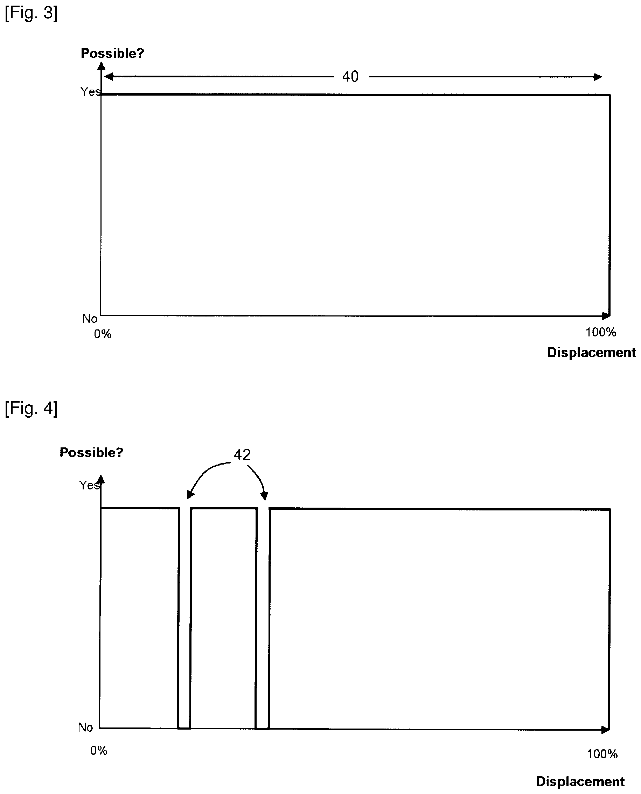

With reference to Figure 3, in known transmissions, such as the transmission of US 7,793,496, the hydraulic pump and the hydraulic motor are each capable of outputting a range of displacements 40 which is continuous between 0% and 100% of the maximum displacement of the pump or motor respectively.

The invention concerns transmissions in which one of the machines is operated with a discontinuous range of possible displacements, at least in a normal operating mode. In the following examples, the machine which is operated with a discontinuous range of possible displacements is the hydraulic pump, however the same principles apply if the hydraulic motor is operated with a discontinuous range of possible displacements, instead of the hydraulic pump.

With reference to Figure 4, in an example embodiment, the machine controller of the hydraulic pump ensures that the hydraulic pump is not operated at two excluded displacements 42 which are selected because at those displacements, forces are generated which lead to vibrations which correspond to resonant frequencies of the tower and the blades. Thus, the range of displacements of the hydraulic pump is discontinuous. The controller may (or may not) take into account that the displacement at which the unwanted vibrations occur can vary with the speed of rotation of the crankshaft.

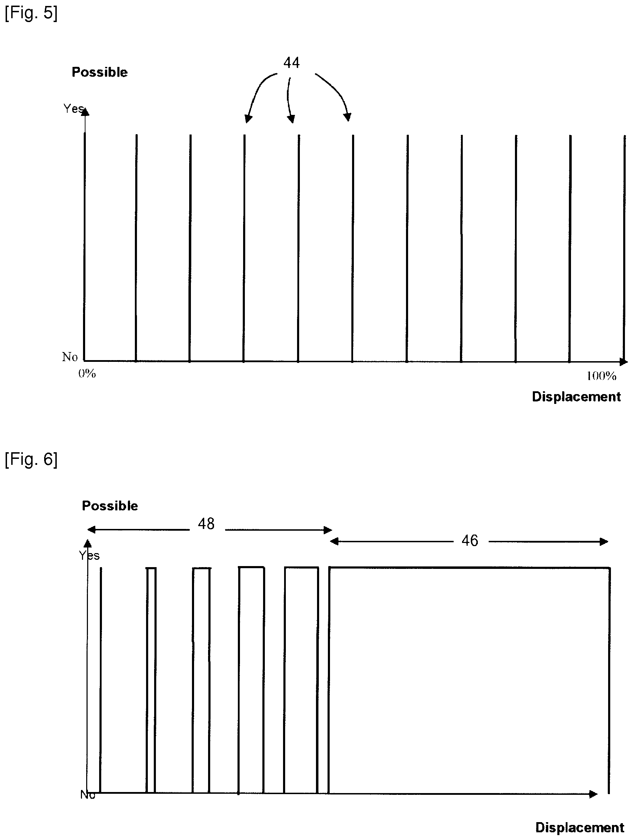

The possible displacements for an alternative machine which is not operated across the entire range of possible displacements are illustrated in Figure 5. In this case, in a normal operating mode, the displacement of the hydraulic pump (for example) takes one of a plurality of discrete values 44 and is therefore discontinuous. The displacement is quantised. This might arise in an embodiment where the machine is operated with selected cylinders undergoing an active cycle on each consecutive cycle volume and the remaining cylinders undergoing inactive cycles on each consecutive cycle of cylinder volume so the displacement is always a fraction n / m of maximum displacement, where n is the number of cylinders undergoing active cycles on each consecutive cycle and m is the total number of cylinders.

Figure 6 illustrates the possible displacements of a further machine which can be operated across a continuous range of displacements 46 towards the upper end of the range of possible displacements but where there is a discontinuous range of displacements 48 towards the lower end of the range of possible displacements. This circumstance can arise, for example, when a machine is operated as described with reference to Figure 5, but the machine controller is programmed to alter the timing of active control of the LPV and/or HPV to change the fraction of maximum displacement output by each cylinder, for example, using the methods disclosed in EP 1 537 333. Typically, it is only possible to do this to a limited extent due to the forces that would be required to actively open or close a valve against the substantial pressure differential found in the middle of a stroke, or the effect on the lifetime of valves which would arise if they were actively opened whilst there was highly pressurised fluid in the cylinder, in which case they would impact their valve seat or endstop with considerable force. In the example shown in Figure 6, it is possible for the machine controller to vary the displacement by individual cylinders from 80-100% of maximum cylinder volume by controlling valve timing.

During normal operation of the turbine, the turbine controller controls the displacement of the hydraulic motor and the hydraulic pump to regulate the input and output torque of the hydraulic motor and the hydraulic pump to maximise power output of the turbine or a group of turbines of which the turbine is part, while taking into account other factors, for example, a requirement to provide smooth electricity output to an electricity grid.

The displacement of the hydraulic pump is usually controlled such as to regulate the torque in the input driveshaft so that the torque applied to the blades is optimised to receive power from the wind as efficiently as possible. Nevertheless, as part of normal operation, the controller may take other factors into account, for example, it may increase the speed of rotation of the rotor in advance of a predicted gust of wind, to maximise the power received from the gust of wind.

The displacement of the hydraulic motor is typically selected so that the torque in the output driveshaft is optimal for efficient power generation. Furthermore, the displacement of the hydraulic motor, and therefore the torque in the output driveshaft, is continuously controlled to control the phase and frequency of the generator, so that it remains in phase with a load, such as an electricity grid.

In order to control the displacement of the hydraulic pump and the hydraulic motor, the turbine controller transmits suitable controls signals to the respective machine controllers. In alternative embodiments, the turbine controller may function as one or both of the machine controllers. The controls signals may for example, comprise signals indicating a desired displacement, or a target pressure in the high pressure line, signals switching a generator and the hydraulic motor which drives it to an active or idle mode.

The torque in the input driveshaft is proportional to both the displacement of the hydraulic pump and the pressure differential between the high pressure and low pressure lines. Similarly, the torque in the output driveshaft is proportional to both the displacement of the hydraulic motor and the pressure differential between the high pressure and low pressure lines. In practice, because the pressure in the high pressure line typically varies substantially more dramatically than the pressure in the low pressure line, the pressure in the high pressure line is most closely regulated.

From time to time, in order to achieve both the desired input torque and output torque, it would be desirable to change the displacement of the hydraulic pump (in this example) to a displacement which is not in the range of displacements at which the hydraulic pump is operated. In that case, the turbine controller changes the pressure within the high pressure manifold by changing the displacement of the machine which is operated in a continuous range of displacements (in this case the hydraulic motor). The pressure in the high pressure manifold changes in dependence on the difference between the amount of working fluid displaced into the high pressure manifold by the hydraulic pump and the amount of working fluid displaced out of the high pressure manifold by the hydraulic motor, and also the volume of the accumulator. Therefore, by changing the pressure in the high pressure manifold, it becomes possible to obtain the desired input and output torques, which would not otherwise have been possible due to the discontinuity in the displacement of the hydraulic pump.

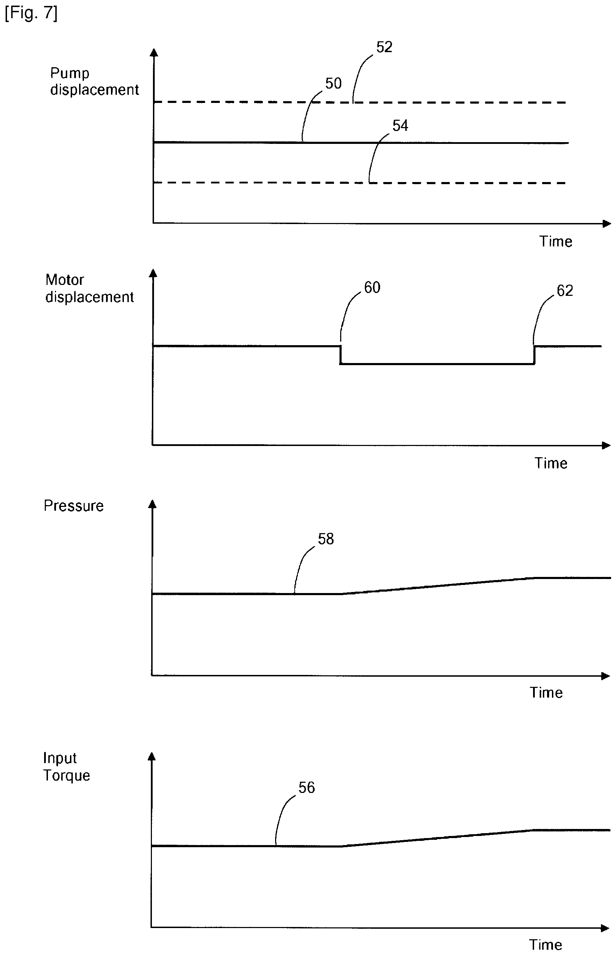

Thus, with reference to Figure 7, it may be that the displacement of the hydraulic pump has a first value 50, which is intermediate discrete higher 52 and lower displacements 54, and that the hydraulic pump is not operated with a displacement between these levels. In order to obtain a small increase in input torque 56, the high pressure line pressure 58 is increased by decreasing 60 and then subsequently increasing 62 the displacement of the hydraulic motor. Thus, a change in input torque is obtained that would not have been possible only by changing the displacement of the hydraulic pump. As the pressure can be varied, the input and output torque can therefore vary across continuous ranges even though only the hydraulic motor is operating in a continuous range of displacements.

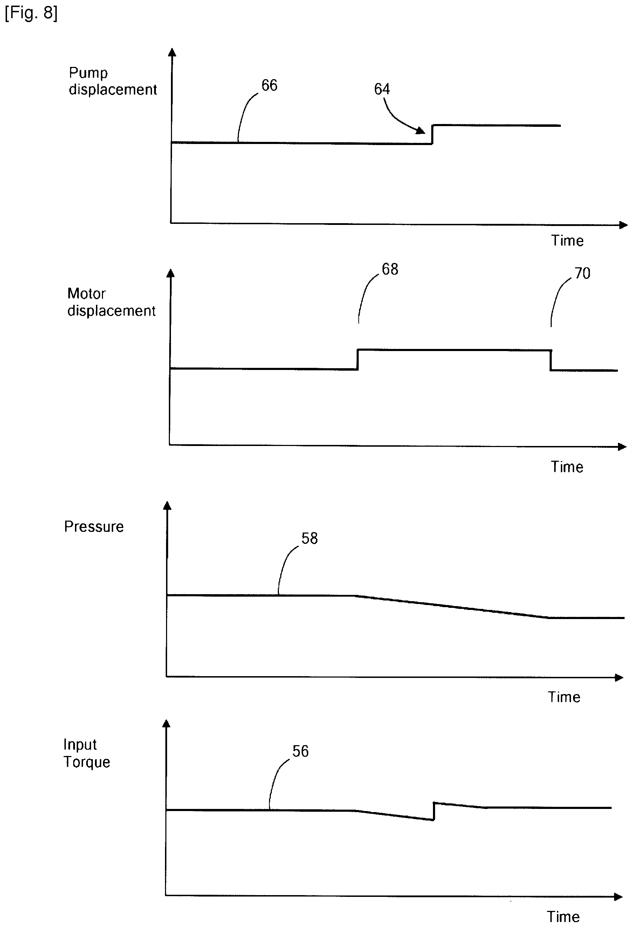

With reference to Figure 8, changes in the pressure 58 in the high pressure line (and therefore the pressure differential between the high pressure line and the low pressure line as the pressure in the low pressure line does not vary substantially) can be synchronised with intended changes 64 in the displacement 66 of the hydraulic pump. Once a decision is made to make a step change in the displacement of the hydraulic pump (in this example, an increase in displacement), the displacement of the motor is changed 68 (in this example, increased) for a period of time extending from before until after the change in the displacement of the hydraulic pump. This leads to a decrease in the pressure in the high pressure line which has the effect of smoothing the variation in the input torque 72. The displacement of the motor is then changed back 70 to halt the change in pressure. In the example shown in Figure 8 there is a small net increase in input torque. Thus, where possible the change in the displacement of the hydraulic machine with the discontinuous range of displacements can be scheduled for a specific time and the pressure changed in advance by controlling the hydraulic machine with the continuous range of displacements. This minimises departure from the desired input torque.

The method of the invention concerns the normal operating mode of a hydraulic transmission. Alternative modes may apply in other circumstances, for example on start-up or shut-down, or in response to a fault. Although one of the hydraulic motor and the hydraulic pump is operated with a discontinuous range of displacements in the normal operating mode, there may be embodiments where both the hydraulic motor and the hydraulic pump are operated with a wholly continuous range of displacements in alternative operating modes, such as those mentioned above.

The invention is particularly useful in applications such as wind turbines, where it may allow the use of a hydraulic pump in particular with discontinuous ranges of displacement. As the hydraulic pump is coupled to the turbine there is generally a high inertia and so the period of time which is required for a desired input and output torque to be established does not present a problem.

In one embodiment, the hydraulic pump comprises a plurality of cylinders which are operated by the method described above with reference to Figure 5 in which selected cylinders undergo active cycles on each cycle of cylinder volume and the remaining cylinders in the plurality of cylinders undergo inactive cycles. From time to time the selection of cylinders is changed. However, the selected cylinders are always combinations of groups of cylinders (typically groups of 3 cylinders or 4 cylinders or more) which are selected to minimise torque ripple. For example, the groups may comprise cylinders which are phased apart by 360° / n where n is the number of cylinders in the group. Thus the sum of the displacement from the cylinders in a group has reduced variation (thereby leading to reduced torque ripple) in comparison with prior art methods for selecting the displacement of every individual cylinder to best match a demand, for example as disclosed in EP 0 361927, EP 0 494 236, and EP 1 537 333. Furthermore, where possible combinations of groups of cylinders are selected such that for each cylinder there is a further cylinder which is in the same phase and located directly opposite across the crankshaft. Thus, the forces on the crankshaft from the opposed cylinders cancel each other out, reducing radial forces (bearing side load) on the crankshaft and therefore the bearings.

Although the example embodiment predominantly concerns wind turbine generators it will be apparent to one skilled in the art that a hydraulic transmission according to the invention is also useful for other type of renewable energy turbine and other applications, such as vehicle transmissions.

Further variations and modifications may be made within the scope of the invention as defined in the appended claims.

### Reference Signs List

- 1: Wind turbine generator
- 2: Tower
- 4: Turbine
- 6: Blades
- 8: Input driveshaft
- 10: Variable displacement hydraulic pump
- 12: Hydraulic transmission
- 14: Hydraulic motor
- 16: Electricity generator
- 18: Output driveshaft
- 20: Oil tank
- 22: Low pressure line
- 24: High pressure line
- 26: Accumulator
- 28: Turbine controller
- 30: Pressure sensor
- 40: Range of possible displacements
- 42: Excluded displacements
- 44: Discrete displacement values
- 46: Continuous range of displacements
- 48: Discontinuous range of displacements 48
- 50: First value of pump displacement
- 52: Higher discrete displacement
- 54: Lower discrete displacement
- 56: Input torque
- 58: High pressure line pressure
- 60: Decrease in motor displacement
- 62: Increase in motor displacement
- 64: Change in pump displacement
- 66: Displacement of pump
- 68: Change in motor displacement
- 70: Change in motor displacement
- 72: Input torque
- 100: Hydraulic machine
- 102: Cylinders
- 104: Cylinder volumes
- 106: Pistons
- 108: Rotatable crankshaft
- 110: Multi-lobe eccentric cam
- 112: Shaft position and speed sensor
- 114: Signal line
- 116: Machine controller
- 118: Low Pressure Valves (LPVs)
- 120: Low pressure manifold
- 126: LPV control lines
- 128: High Pressure Valves (HPVs)
- 134: HPV control lines

## Claims

1. A hydraulic transmission (12) comprising a hydraulic pump (10), a hydraulic motor (14), a high pressure line (24) connecting an output of the hydraulic pump to an input of the hydraulic motor and a low pressure line (22) connecting an output of the hydraulic pump to an input of the hydraulic motor, and a transmission controller (28), wherein the hydraulic pump and the hydraulic motor each comprise a low pressure manifold (120) in communication with the low pressure line, a high pressure manifold (130) in communication with the high pressure line, a plurality of cylinders (102) and a plurality of valves (118, 128) for regulating the flow of working fluid between each cylinder and the low and high pressure manifolds, at least one valve associated with each cylinder being an electronically controlled valve which is actively controllable on each cycle of cylinder volume to select whether each cylinder undergoes an active cycle in which there is a net displacement of working fluid or an inactive cycle in which there is no net displacement of working fluid,
**characterized in that**, in at least one operating mode, one of the hydraulic pump or the hydraulic motor is operated with a discontinuous range of displacements of working fluid and the other of the hydraulic pump or the hydraulic motor is operated with a continuous range of displacements of working fluid, and the transmission controller is configured to control the displacement of said other of the hydraulic pump and the hydraulic motor being operated with the continuous range of displacements so as to vary the pressure in the high pressure manifold to allow the input and output torque of the transmission to be varied across continuous ranges and to obtain desired values of the input and output torque while said one of the hydraulic pump or the hydraulic motor is operated in the discontinuous range of displacements.

2. A hydraulic transmission according to claim 1, wherein the hydraulic pump or the hydraulic motor respectively is capable of producing a continuous range of displacements but is programmed to exclude one or more displacements.

3. A hydraulic transmission according to claim 1, wherein said discontinuous range of displacements excludes displacements selected to avoid generating forces with one or more undesirable frequencies.

4. A hydraulic transmission according to claim 1, wherein said discontinuous range of displacements includes displacements selected to minimise generated noise.

5. A hydraulic transmission according to claim 1, wherein the high pressure line is in continuous or selective communication with a variable volume working fluid retaining container.

6. A hydraulic transmission according to claim 1, wherein the hydraulic pump or the hydraulic motor respectively is configured to cause selected cylinders to undergo active cycles and the remainder of said plurality of cylinders to undergo inactive cycles, wherein the selected cylinders form one or more groups of cylinders, so that there is a correlation between cylinders in each group undergoing active cycles.

7. A hydraulic transmission according to claim 6, wherein in at least some circumstances, one or more groups of cylinders are selected such that for each cylinder in the selected one or more groups, there is another cylinder which is operated in phase with said cylinder located on the opposite side of the cam, or an integer number, m, of other cylinders operated in phase with said cylinder mutually spaced around the cam by an angle of 360° / m to limit bearing side load.

8. A hydraulic machine according to claim 1, wherein the displacement of said one of the hydraulic pump and the hydraulic motor is variable by controlling the timing of opening or closing of said electronically controlled valves to select the net displacement of cylinders per cycle during active cycles.

9. A hydraulic machine according to claim 1, wherein the pressure in
the high pressure line is changed in advance of a scheduled step change in the displacement of said one of the hydraulic pump and the hydraulic motor.

10. A hydraulic machine according to claim 1, wherein the displacement of said one of the hydraulic pump and the hydraulic motor is variable by controlling the timing of opening or closing of said electronically controlled valves to select the net displacement of cylinders during active cycles.

11. A hydraulic machine according to claim 10, wherein the displacement of said one of the hydraulic pump and the hydraulic motor is variable across an operating range from zero to an operating maximum by the selection of one or more groups of cylinders which are to execute active cycles on each successive cycle, and by controlling the timing of opening or closing of said electronically controlled valves, wherein the range over which the displacement of cylinders during active cycles by controlling the timing of opening or closing of said electronically controlled valves is such that the net displacement of the hydraulic pump or hydraulic motor respectively is continuous in an upper region of said operating range but is discontinuous in a lower region of said operating range.

12. A renewable energy turbine generator comprising a hydraulic transmission according to claim 1, a turbine driving the hydraulic pump and an electrical generator driven by the hydraulic motor.

13. A method of operating a hydraulic transmission (12) comprising a hydraulic pump (10), a hydraulic motor (14), a high pressure line (24) connecting an output of the hydraulic pump to an input of the hydraulic motor and a low pressure line (22) connecting an output of the hydraulic pump to an input of the hydraulic motor, wherein the hydraulic pump and the hydraulic motor each comprise a low pressure manifold (120), a high pressure manifold (130), a plurality of cylinders (102) and a plurality of valves (118, 128) for regulating the flow of working fluid between each cylinder and the low and high pressure manifolds, at least one valve associated with each cylinder being an electronically controlled valve which is actively controlled on each cycle of cylinder volume to select whether each cylinder undergoes an active cycle in which there is a net displacement of working fluid or an inactive cycle in which there is no net displacement of working fluid,
**characterized in that** the method comprises coordinating a discontinuous change in the displacement of working fluid by one of the hydraulic pump or the hydraulic motor with a change in the pressure in the high pressure manifold to thereby regulate the input and output torque of the hydraulic transmission, and said one of the hydraulic pump or the hydraulic motor is operated in a discontinuous range of displacements of working fluid and the other of the hydraulic pump or the hydraulic motor is operated in a continuous range of displacements of working fluid, and the input and output torque of the hydraulic transmission are variable across continuous ranges while said hydraulic pump or the hydraulic motor respectively is operated in the discontinuous range of displacements by virtue of said change in pressure in the high pressure manifold,

14. A computer readable medium storing a computer program which,
when executed on a hydraulic transmission controller, causes the hydraulic transmission to function as a hydraulic transmission according to claim 1.

15. A computer readable medium storing a computer program which,
when executed on a hydraulic transmission controller, causes the hydraulic transmission to function according to the method of claim 13.

## Patentansprüche

1. Hydraulikgetriebe (12), umfassend:
eine Hydraulikpumpe (10), einen Hydraulikmotor (14), eine Hochdruckleitung (24), welche einen Ausgang der Hydraulikpumpe mit einem Eingang des Hydraulikmotors verbindet, und eine Niederdruckleitung (22), die einen Ausgang der Hydraulikpumpe mit einem Eingang des Hydraulikmotors verbindet, und eine Getriebesteuerung (28), wobei die Hydraulikpumpe und der Hydraulikmotor jeweils einen Niederdruckkrümmer (120) in Kommunikation mit der Niederdruckleitung, einen Hochdruckkrümmer (130) in Kommunikation mit der Hochdruckleitung, mehrere Zylinder (102) und mehrere Ventile (118, 128) zum Regeln der Strömung von Arbeitsfluid zwischen jedem Zylinder und dem Nieder- und Hochdruckkrümmer umfassen, wobei mindestens ein Ventil mit jedem Zylinder verknüpft ist, das ein elektronisch gesteuertes Ventil ist, das in jedem Zyklus des Zylindervolumens steuerbar ist, um auszuwählen, ob jeder Zylinder einen aktiven Zyklus, bei dem eine Nettoverdrängung von Arbeitsfluid vorliegt, oder einen inaktiven Zyklus durchläuft, bei dem keine Nettoverdrängung von Arbeitsfluid vorliegt, **dadurch gekennzeichnet, dass**, in mindestens einem Betriebsmodus, entweder die Hydraulikpumpe oder der Hydraulikmotor mit einem diskontinuierlichen Verdrängungsbereich von Arbeitsfluid betrieben wird und der bzw. die jeweils andere von Hydraulikpumpe und Hydraulikmotor mit einem kontinuierlichen Verdrängungsbereich von Arbeitsfluid betrieben wird, und wobei die Getriebesteuerung zum Steuern der Verdrängung von jeweils dem anderen von Hydraulikpumpe und Hydraulikmotor konfiguriert ist, um die Verdrängung des anderen von Hydraulikpumpe und Hydraulikmotor zu steuern, die bzw. der mit dem kontinuierlichen Verdrängungsbereich betrieben wird, um den Druck im Hochdruckkrümmer zu variieren, um den Eingangs- und Ausgangsdrehmoment des Getriebes über kontinuierliche Bereiche zu variieren und gewünschte Werte des Eingangs- und Ausgangsdrehmoments zu erhalten, während entweder die Hydraulikpumpe oder der Hydraulikmotor im diskontinuierlichen Verdrängungsbereich betrieben wird.

2. Hydraulikgetriebe nach Anspruch 1, wobei die Hydraulikpumpe oder der Hydraulikmotor jeweils in der Lage sind, einen kontinuierlichen Verdrängungsbereich zu erzeugen, aber nicht programmiert sind, um eine oder mehrere Verdrängungen auszuschließen.

3. Hydraulikgetriebe nach Anspruch 1, wobei der diskontinuierliche Verdrängungsbereich Verdrängungen ausschließt, die zum Verhindern der Erzeugung von Kräften mit einer oder mehreren Frequenzen ausgewählt sind.

4. Hydraulikgetriebe nach Anspruch 1, wobei der diskontinuierliche Verdrängungsbereich Verdrängungen einschließt, die zum Minimieren von erzeugten Geräuschen ausgewählt sind.

5. Hydraulikgetriebe nach Anspruch 1, wobei die Hochdruckleitung in kontinuierlicher oder selektiver Kommunikation mit einem Arbeitsfluid-Speicherbehälter mit variablem Volumen steht.

6. Hydraulikgetriebe nach Anspruch 1, wobei die Hydraulikpumpe oder der Hydraulikmotor jeweils so konfiguriert sind, um zu bewirken, dass ausgewählte Zylinder aktive Zyklen durchlaufen und die übrigen der mehreren Zylinder inaktive Zyklen durchlaufen, wobei die ausgewählten Zylinder eine oder mehrere Gruppen von Zylindern bilden, sodass eine Korrelation zwischen den Zylindern in jeder Gruppe vorliegt, die aktive Zyklen durchläuft.

7. Hydraulikgetriebe nach Anspruch 6, wobei unter mindestens einigen Umständen mindestens eine oder mehrere Zylindergruppen derart ausgewählt werden, dass für jeden Zylinder in der ausgewählten einen oder mehreren Gruppen ein anderer Zylinder vorliegt, der phasengleich mit dem Zylinder betrieben wird, der auf der gegenüberliegenden Seite des Nockens angeordnet ist, oder eine ganze Zahl m von anderen Zylindern phasengleich mit dem Zylinder betrieben wird, die in gleichmäßigen Abständen um den Nocken in einem Winkel von 360°/m zum Eingrenzen der Lagerseitenlast betrieben wird.

8. Hydraulische Maschine nach Anspruch 1, wobei die Verdrängung des einen von Hydraulikpumpe und Hydraulikmotor durch Steuern des Zeitpunkts des Öffnens und Schließens des elektronisch gesteuerten Ventils zum Auswählen der Nettoverdrängung der Zylinder pro Zyklus während der aktiven Zyklen variabel ist.

9. Hydraulische Maschine nach Anspruch 1, wobei der Druck in der Hochdruckleitung vor einer programmierten Schrittänderung der Verdrängung des einen von Hydraulikpumpe und Hydraulikmotor verändert wird.

10. Hydraulische Maschine nach Anspruch 1, wobei die Verdrängung des einen von Hydraulikpumpe und Hydraulikmotor durch Steuern des Zeitpunkts des Öffnens und Schließens des elektronisch gesteuerten Ventils zum Auswählen der Nettoverdrängung der Zylinder während der aktiven Zyklen variabel ist.

11. Hydraulische Maschine nach Anspruch 10, wobei die Verdrängung von Hydraulikpumpe oder Hydraulikmotor über einen Betriebsbereich von Null bis zu einem Betriebshöchstwert durch die Auswahl einer oder mehrerer Gruppen von Zylindern variabel ist, die auch aktive Zyklen in jedem folgenden Zyklus ausführen müssen, und durch Steuern des Zeitpunkts des Öffnens oder Schließens der elektronisch gesteuerten Ventile, wobei der Bereich, über den die Verdrängung der Zylinder während aktiver Zyklen durch Steuern des Zeitpunkts des Öffnens oder Schließens der elektronisch gesteuerten Ventile derart ausgewählt ist, dass die Nettoverdrängung der Hydraulikpumpe oder des Hydraulikmotors in einem oberen Bereich des Betriebsbereichs kontinuierlich ist, aber in einem unteren Bereich des Betriebsbereichs diskontinuierlich ist.

12. Turbinengenerator für erneuerbare Energien, umfassend ein Hydraulikgetriebe nach Anspruch 1, eine Turbine, welche die Hydraulikpumpe antreibt, und einen Stromgenerator, der durch den Hydraulikmotor angetrieben wird.

13. Verfahren zur Herstellung eines Hydraulikgetriebes (12), umfassend eine Hydraulikpumpe (10), einen Hydraulikmotor (14), eine Hochdruckleitung (24), die einen Ausgang der Hydraulikpumpe mit einem Eingang des Hydraulikmotors verbindet, und eine Niederdruckleitung (22), die einen Ausgang der Hydraulikpumpe mit einem Eingang des Hydraulikmotors verbindet, wobei die Hydraulikpumpe und der Hydraulikmotor jeweils einen Niederdruckkrümmer (120), einen Hochdruckkrümmer (130), mehrere Zylinder (102) und mehrere Ventile (118, 128) zum Regeln der Strömung von Arbeitsfluid zwischen jedem Zylinder und dem Nieder- und Hochdruckkrümmer umfassen, wobei mindestens ein Ventil mit jedem Zylinder verknüpft ist, das ein elektronisch gesteuertes Ventil ist, das aktiv in jedem Zyklus von Zylindervolumen zum Auswählen gesteuert wird, ob jeder Zylinder einen aktiven Zyklus, in dem eine Nettoverdrängung von Arbeitsfluid vorliegt, oder einen inaktiven Zyklus, in dem keine Nettoverdrängung von Arbeitsfluid vorliegt, durchläuft,
**dadurch gekennzeichnet, dass** das Verfahren das Koordinieren einer diskontinuierlichen Änderung der Verdrängung von Arbeitsfluid durch die Hydraulikpumpe oder den Hydraulikmotor durchläuft, mit einer Veränderung im Druck des Hochdruckkrümmer, um so den Eingangs- und Ausgangsdrehmoment des Hydraulikgetriebes zu regeln, und wobei entweder die Hydraulikpumpe oder der Hydraulikmotor in einem diskontinuierlichen Verdrängungsbereich von Arbeitsfluid betrieben wird und das andere von Hydraulikpumpe und Hydraulikmotor in einem kontinuierlichen Verdrängungsbereich betrieben wird, und wobei das Eingangs- und Ausgangsdrehmoment des Hydraulikgetriebes über die kontinuierlichen Bereiche variabel ist, während die Hydraulikpumpe bzw. der Hydraulikmotor in dem diskontinuierlichen Verdrängungsbereich aufgrund der Druckänderung im Hochdruckkrümmer betrieben wird.

14. Computerlesbares Medium, das ein Computerprogramm speichert, das, wenn es in einer hydraulischen Getriebesteuerung ausgeführt wird, bewirkt, dass das Hydraulikgetriebe wie ein Hydraulikgetriebe nach Anspruch 1 arbeitet.

15. Computerlesbares Medium, das ein Computerprogramm speichert, das, wenn es in einer hydraulischen Getriebesteuerung ausgeführt wird, bewirkt, dass das Hydraulikgetriebe gemäß dem Verfahren nach Anspruch 13 arbeitet.

## Revendications

1. Transmission hydraulique (12) comprenant une pompe hydraulique (10), un moteur hydraulique (14), une conduite haute pression (24) raccordant une sortie de la pompe hydraulique à une entrée du moteur hydraulique, une conduite basse pression (22) raccordant une sortie de la pompe hydraulique à une entrée du moteur hydraulique, et un module de commande de transmission (28), dans laquelle la pompe hydraulique et le moteur hydraulique comprennent chacun un collecteur basse pression (120) en communication avec la conduite basse pression, un collecteur haute pression (130) en communication avec la conduite haute pression, une pluralité de cylindres (102) et une pluralité de soupapes (118, 128) pour réguler la circulation de fluide moteur entre chaque cylindre et les collecteurs basse et haute pression, au moins une soupape associée à chaque cylindre étant une soupape commandée électroniquement qui peut être commandée activement sur chaque cycle de volume du cylindre pour choisir si chaque cylindre est soumis à un cycle actif, dans lequel il y a un déplacement net de fluide moteur, ou à un cycle inactif, dans lequel il n'y a pas de déplacement net de fluide moteur,
**caractérisée en ce que**, dans au moins un mode de fonctionnement, un composant entre la pompe hydraulique et le moteur hydraulique fonctionne avec une plage discontinue de déplacements de fluide moteur et l'autre composant entre la pompe hydraulique et le moteur hydraulique fonctionne avec une plage continue de déplacements de fluide moteur, et le module de commande de transmission est configuré pour commander la cylindrée dudit autre composant entre la pompe hydraulique et le moteur hydraulique fonctionnant avec la plage continue de déplacements afin de faire varier la pression dans le collecteur haute pression pour permettre de faire varier les couples d'entrée et de sortie de la transmission sur l'ensemble des plages continues et d'obtenir les valeurs souhaitées pour les couples d'entrée et de sortie tandis que ledit premier composant entre la pompe hydraulique et le moteur hydraulique fonctionne dans la plage discontinue de déplacements.

2. Transmission hydraulique selon la revendication
1, dans laquelle la pompe hydraulique ou le moteur hydraulique, respectivement, est capable de produire une plage continue de cylindrées mais est programmé(e) pour exclure une ou plusieurs cylindrées.

3. Transmission hydraulique selon la revendication
1, dans laquelle ladite plage discontinue de cylindrées exclut des cylindrées choisies afin d'éviter la production de forces ayant une ou plusieurs fréquences indésirables.

4. Transmission hydraulique selon la revendication 1, dans laquelle ladite plage discontinue de cylindrées inclut des cylindrées choisies afin de réduire au minimum le bruit engendré.

5. Transmission hydraulique selon la revendication
1, dans laquelle la conduite haute pression est en communication continue ou sélective avec un récipient retenant du fluide moteur de volume variable.

6. Transmission hydraulique selon la revendication
1, dans laquelle la pompe hydraulique ou le moteur hydraulique, respectivement, est configuré(e) pour faire subir des cycles actifs à des cylindres choisis et des cycles inactifs au reste de ladite pluralité de cylindres, dans laquelle les cylindres choisis constituent un ou plusieurs groupes de cylindres, de façon à ce qu'il y ait une corrélation entre cylindres dans chaque groupe subissant des cycles actifs.

7. Transmission hydraulique selon la revendication
6, dans laquelle, au moins dans certaines circonstances, un ou plusieurs groupes de cylindres sont choisis de telle sorte que pour chaque cylindre dans le (s) groupe(s) choisi(s), il y a un autre cylindre qui fonctionne en phase avec ledit cylindre situé sur le côté opposé de la came, ou un nombre entier, m, d'autres cylindres fonctionnant en phase avec ledit cylindre sont espacés l'un par rapport à l'autre autour de la came d'un angle de 360/m° pour limiter l'effort latéral sur le palier.

8. Machine hydraulique selon la revendication 1,
dans laquelle on peut faire varier la cylindrée dudit composant entre pompe hydraulique et moteur hydraulique en commandant le moment de l'ouverture ou la fermeture de ces vannes desdites soupapes commandées électroniquement pour choisir la cylindrée nette de cylindres par cycle pendant les cycles actifs.

9. Machine hydraulique selon la revendication 1,
dans laquelle la pression dans la conduite haute pression est modifiée avant un changement de stade programmé de la cylindrée dudit composant entre pompe hydraulique et moteur hydraulique.

10. Machine hydraulique selon la revendication 1,
dans laquelle on peut faire varier la cylindrée dudit composant entre pompe hydraulique et moteur hydraulique en commandant le moment de l'ouverture ou la fermeture desdites soupapes commandées électroniquement pour choisir la cylindrée nette de cylindres pendant les cycles actifs.

11. Machine hydraulique selon la revendication 10,
dans laquelle on peut faire varier la cylindrée dudit composant entre pompe hydraulique et moteur hydraulique sur toute une plage de fonctionnement de zéro à un maximum de fonctionnement en choisissant le(s) groupe(s) de cylindres qui doivent exécuter des cycles actifs sur chaque cycle successif, et en commandant le moment de l'ouverture ou la fermeture desdites soupapes commandées électroniquement, dans laquelle la plage sur laquelle la cylindrée des cylindres pendant les cycles actifs en commandant le moment de l'ouverture ou la fermeture desdites soupapes commandées électroniquement est telle que la cylindrée nette de, respectivement, la pompe hydraulique ou le moteur hydraulique est continue dans la zone supérieure de ladite plage de fonctionnement mais est discontinue dans la zone inférieure de ladite plage de fonctionnement.

12. Turbogénératrice à énergie renouvelable comprenant une transmission hydraulique selon la revendication 1, une turbine entraînant la pompe hydraulique et un générateur électrique entraîné par le moteur hydraulique.

13. Procédé de mise en oeuvre d'une transmission hydraulique (12) comprenant une pompe hydraulique (10), un moteur hydraulique (14), une conduite haute pression (24) raccordant une sortie de la pompe hydraulique à une entrée du moteur hydraulique et une conduite basse pression (22) raccordant une sortie de la pompe hydraulique à une entrée du moteur hydraulique, dans lequel la pompe hydraulique et le moteur hydraulique comprennent chacun un collecteur basse pression (120), un collecteur haute pression (130), une pluralité de cylindres (102) et une pluralité de soupapes (118, 128) pour réguler la circulation de fluide moteur entre chaque cylindre et les collecteurs basse et haute pression, au moins une soupape associée à chaque cylindre étant une soupape commandée électroniquement qui est commandée activement sur chaque cycle de volume du cylindre pour choisir si chaque cylindre est soumis à un cycle actif, dans lequel il y a un déplacement net de fluide moteur, ou à un cycle inactif, dans lequel il n'y a pas de déplacement net de fluide moteur,
**caractérisé en ce que** le procédé comprend la coordination d'une modification discontinue du déplacement de fluide moteur par un composant entre la pompe hydraulique et le moteur hydraulique avec une modification de la pression dans le collecteur haute pression pour réguler de ce fait les couples d'entrée et de sortie de la transmission hydraulique, et ledit composant entre la pompe hydraulique et le moteur hydraulique fonctionne dans une plage discontinue de déplacements de fluide moteur et l'autre composant entre la pompe hydraulique et le moteur hydraulique fonctionne dans une plage continue de déplacements de fluide moteur, et les couples d'entrée et de sortie de la transmission hydraulique sont variables dans l'ensemble de plages continues alors que ladite pompe hydraulique ou ledit moteur hydraulique, respectivement, fonctionne dans la plage discontinue de cylindrées en vertu de ladite modification de pression dans le collecteur haute pression.

14. Support lisible par un ordinateur stockant un programme informatique qui, quand il est exécuté sur un module de commande de transmission hydraulique, fait fonctionner la transmission hydraulique comme une transmission hydraulique selon la revendication 1.

15. Support lisible par un ordinateur stockant un programme informatique qui, quand il est exécuté sur un module de commande de transmission hydraulique, fait fonctionner la transmission hydraulique suivant le procédé selon la revendication 13.
